# EUROPÄISCHE PATENTSCHRIFT

(11) **EP 3 692 277 B1**
(45) Veröffentlichungstag und Bekanntmachung des Hinweises auf die Patenterteilung: **26.05.2021**
(21) Anmeldenummer: 18769956.6
(22) Anmeldetag: 06.09.2018
(51) Int. Cl.: F16H 7/12

(54) **RIEMENSPANNVORRICHTUNG**
BELT-TENSIONING DEVICE
DISPOSITIF TENDEUR DE COURROIE

(30) Priorität: 05.10.2017 DE 102017217645
(43) Veröffentlichungstag der Anmeldung: 12.08.2020
(73) Patentinhaber: Bayerische Motoren Werke Aktiengesellschaft, 80809 München (DE)
(72) Erfinder: ISLEMECIOGLU, Yavuz, 80992 Muenchen (DE); SAGNER, Matthias, 80796 München (DE); SLIWA, Frank, 85748 Garching (DE); WEISSENBEK, Emmerich, 84034 Landshut (DE); WUNDER, Johannes, 85662 Hohenbrunn (DE)
(86) Internationale Anmeldenummer: PCT/EP2018/073957
(87) Internationale Veröffentlichungsnummer: WO 2019/068413

(56) Entgegenhaltungen:
- EP-A1- 3 023 670
- DE-A1-102014 220 926
- DE-A1-102015 119 935
- JP-A- H10 186 759

## Beschreibung

Die Erfindung betrifft eine Riemenspannvorrichtung für einen Riementrieb einer Brennkraftmaschine mit den Merkmalen aus dem Oberbegriff des Patentanspruchs 1.

Zum technischen Umfeld wird beispielsweise auf die Europäische Patentanmeldung EP 3 023 670 A1 hingewiesen. In dieser Offenlegungsschrift ist eine Riemenspannvorrichtung beschrieben, umfassend: einen Grundkörper mit einem Befestigungsabschnitt und einer Öffnung für eine Antriebswelle, erste und zweite Spannarme die mittels erster und zweiter Lager an dem Grundkörper um erste und zweite Schwenkachsen schwenkbar gelagert sind und erste und zweite Spannrollen aufweisen, eine Federanordnung, welche die beiden Spannarme in Umfangsrichtung gegeneinander vorspannt, wobei die Federanordnung zumindest eine Bügelfeder aufweist, die eine Umfangserstreckung von weniger als 360° um die erste und die zweite Schwenkachse aufweist, wobei die zumindest eine Bügelfeder erste und zweite Stützabschnitte aufweist, die an den ersten und den zweiten Spannarm abgestützt sind, sowie einen sich zwischen den ersten und zweiten Stützabschnitt erstreckenden Federabschnitt, wobei die zumindest eine Bügelfeder im Bereich des ersten und zweiten Stützabschnitts eine axiale Länge aufweist, die kürzer ist als die axiale Gesamtlänge der Bügelfeder.

Weiter ist aus der Europäischen Patentanmeldung EP 2 128 489 A2, von der die vorliegende Erfindung ausgeht, eine Riemenspannvorrichtung für Startergeneratoranwendungen bekannt. Es handelt sich um eine Riemenspannvorrichtung für einen Riementrieb, der eine Antriebsmaschine mit einer Antriebsriemenscheibe, die von einer Antriebswelle um eine Antriebsachse antreibbar ist, und mehrere weitere Riemenscheiben aufweist, und mit einem endlosen Riemen, der die Antriebsriemenscheibe und die weiteren Riemenscheiben umschlingt, wobei die Riemenspannvorrichtung ein Gehäuse aufweist, in dem zwei Spannarme um eine gemeinsame Schwenkachse schwenkbar gelagert sind, in denen jeweils Spannrollen mit zur Antriebsachse parallelen Drehachsen gelagert sind. Weiter sind die Spannarme mit Federmitteln gegeneinander abgestützt, wobei das Gehäuse bei an der Antriebsmaschine montierter Antriebsriemenscheibe dadurch montierbar ist, dass das Gehäuse in einem die Antriebswelle der Antriebsriemenscheibe umgebenen Ringbereich berührungsfrei gegenüber der Antriebsmaschine ist.

Oben beschriebene Starter-Generator-Konzepte im Riementrieb benötigen eine Erhöhung der Riemenkraft für alle Betriebszustände der Brennkraftmaschine, zur Sicherstellung dass ein Schlupf des Antriebsriemen minimiert ist.

Dies führt in nachteiliger Weise zu einer Kraftstoff-Verbrauchserhöhung der Brennkraftmaschine.

Aufgabe der vorliegenden Erfindung ist es, eine Riemenspannvorrichtung aufzuzeigen, die oben genannten Nachteil nicht aufweist.

Diese Aufgabe wird durch die Merkmale im kennzeichnenden Teil des Patentanspruchs 1 gelöst.

Vorteilhafte Weiterbildungen der Erfindung sind in den Unteransprüchen beschrieben.

Die erfindungsgemäße Ausgestaltung der Riemenspannvorrichtung für einen Riementrieb einer Brennkraftmaschine mit einer elektrischen Maschine, die als Startergenerator funktioniert, kann eine Federkrafterhöhung, beispielsweise beim Start der Brennkraftmaschine oder im Vollastbetrieb erfolgen, wodurch im normalen Betrieb der Brennkraftmaschine ein geringerer Anpressdruck vorliegt, so dass Kraftstoff eingespart wird.

Die Ausgestaltung gemäß Patentanspruch 2 und Patentanspruch 3 sind zwei besonders bevorzugte Ausführungsvarianten, wobei die Ausführung gemäß Patentanspruch 2 platzsparender baut.

Bevorzugt ist das Stellelement gemäß Patentanspruch 4 ein elektromechanisches oder ein hydraulisches Stellelement, da mit beiden große Kräfte aufbringbar sind bei gleichzeitig sehr schnellen Schaltzeiten.

Die Ausgestaltungsvarianten gemäß Patentanspruch 5 und Patentanspruch 6 sind wiederum zwei bevorzugte Ausführungsvarianten.

Im Folgenden ist die Erfindung anhand von vier Figuren näher erläutert.
- Figur 1: zeigt eine Aufsicht auf eine, auf das Wesentliche reduzierte Riemenspannvorrichtung.
- Figur 2: zeigt eine Rückansicht auf die Riemenspannvorrichtung.
- Figur 3: zeigt eine dreidimensionale Aufsicht auf die erfindungsgemäße Riemenspannvorrichtung.
- Figur 4: zeigt in einem Diagramm die erfindungsgemäße Auswirkung.

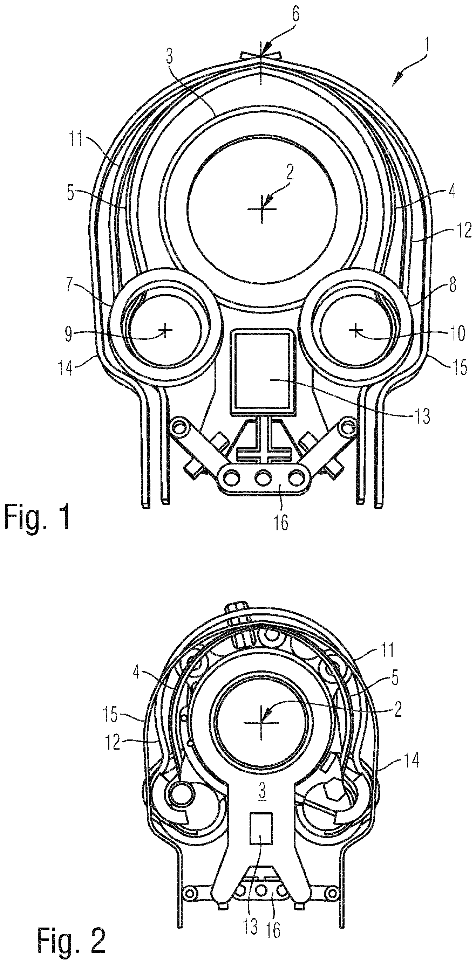

Im Folgenden gelten für gleiche Bauelemente in den Figuren 1 bis 4 die gleichen Bezugsziffern.

Figur 1 zeigt eine Aufsicht auf eine, auf das Wesentliche reduzierte Riemenspannvorrichtung 1. Die Riemenspannvorrichtung 1 ist für einen Riementrieb einer Brennkraftmaschine mit einer elektrischen Maschine vorgesehen, die insbesondere als Starter-Generator eingesetzt wird. Die nicht dargestellte elektrische Maschine weist eine Antriebsriemenscheibe auf, die einerseits von einer Antriebswelle um eine Antriebsachse 2 antreibbar ist und andererseits die elektrische Maschine als Generator antreiben kann. Weiter ist in dem Riementrieb zumindest eine weitere nicht dargestellte Antriebsriemenscheibe vorgesehen, wobei ein ebenfalls nicht dargestellter Endlosriemen die Antriebsriemenscheibe und die weitere Antriebsriemenscheibe umschlingt.

Die Riemenspannvorrichtung 1 weist ein Gehäuse 3 auf, das ebenfalls im vorliegenden Ausführungsbeispiel auf das Wesentliche, eine Tragstruktur, reduziert ist. An dem Gehäuse 3 sind ein erster und ein zweiter Federarm 4, 5 um eine gemeinsame Schwenkachse 6 schwenkbar gelagert. An dem ersten Federarm 4 und dem zweiten Federarm 5 ist jeweils eine Spannrolle 7, 8 mit einer zur Antriebsachse 2 parallelen Drehachse 9, 10 drehbar gelagert. Weiter sind die Federarme 4, 5 an einer Schwenkachse 6 gegeneinander abgestützt, wobei die Federarme 4, 5 den Endlosriemen über die Spannrollen 7, 8 im Bereich der Antriebsriemenscheibe aufgrund der anliegenden Federkraft der Federarme 4, 5, gegeneinander drückt. Erfindungsgemäß ist an den Federarmen 4, 5, jeweils benachbart ein erster und ein zweiter weiterer Federarm 11, 12 vorgesehen, die von einem Stellelement 13 derart verstellbar sind, dass deren Federkräfte die Federkräfte der Federarme 4, 5, auf den Endlosriemen unterstützt oder nicht. In der Stellung 11 des ersten weiteren Federarms und der Stellung 12 des zweiten weiteren Federarms werden der erste Federarm 4 und der zweite Federarm von den Federkräften unterstützt. In einer zweiten Stellung 14 für den ersten weiteren Federarm und einer zweiten Stellung 15 für den zweiten weiteren Federarm, findet keine Kraftunterstützung statt, das heißt, dass auf das Endloszugmittel ein geringerer Druck einwirkt, so dass die Antriebsleistung der Brennkraftmaschine reduziert ist und somit Kraftstoff eingespart wird.

Ein zuschalten der Federkräfte des ersten weiteren Federrahmens 11 und des zweiten weiteren Federarms 12 erfolgt bevorzugt in einer Startphase und/oder in einem hohen Drehzahl bzw. Lastbereich der Brennkraftmaschine.

In einem ersten Ausführungsbeispiel können die Federarme 4, 5 und die weiteren Federarme 11, 12 koaxial zueinander angeordnet sein. Dies führt in vorteilhafter Weise zu keiner baulichen Verlängerung der Riemenspannvorrichtung 1 in der Tiefe.

In einer zweiten Ausführungsvariante können die Federarme 4, 5 und die weiteren Federarme 11, 12 auch axial voneinander beabstandet angeordnet sein, was eine geringe bauliche Verlängerung in der Tiefe darstellt.

In einem Ausführungsbeispiel kann das Stellelement 13 ein elektromechanisches oder ein hydraulisches Stellelement sein. Beide Systeme weisen extrem schnelle Schaltzeiten auf, und sind leicht ansteuerbar.

In einem weiteren Ausführungsbeispiel der erfindungsgemäßen Riemenspannvorrichtung 1 können die Federarme 4, 5 und die weiteren Federarme 11, 12 einen im Wesentlichen rechteckigen oder quadratischen Querschnitt aufweisen. Diese Ausführungsvariante bringt wiederum bauliche Vorteile mit sich, da die Federarme und die weiteren Federarme 11, 12 ein engeres Package aufweisen.

In wiederum einem anderen Ausführungsbeispiel können die Federarme 4, 5 und die weiteren Federarme 11, 12 einen im Wesentlichen runden oder ovalen Querschnitt aufweisen.

Selbstverständlich können auch rechteckige oder quadratische Querschnitte mit runden oder ovalen Querschnitten kombiniert werden.

Figur 2 zeigt eine Rückansicht der erfindungsgemäßen Riemenspannvorrichtung 1.

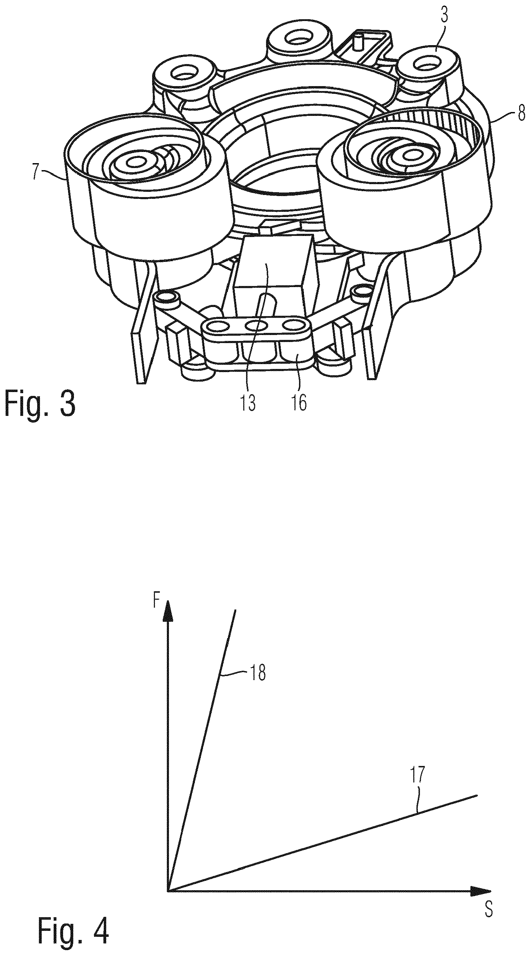

Figur 3 zeigt eine dreidimensionale Aufsicht auf die erfindungsgemäße Riemenspannvorrichtung 1. Wie in den Figuren 1 und 3 deutlich erkennbar ist, kann das Stellelement 13 beispielsweise über einen Kniehebel 16 auf den ersten weiteren Federarm 11 und den zweiten weiteren Federarm 12 einwirken.

Figur 4 zeigt in einem Diagramm die Auswirkung der erfindungsgemäßen Ausgestaltung der Riemenspannvorrichtung 1. Über eine Y-Achse ist ohne Einheit eine Kraft F aufgezeichnet, über eine X-Achse ein Verstellweg S. Es handelt sich hierbei um ein sogenanntes Kraft-Weg-Diagramm. Ein erster Graph, der mit 17 bezeichnet ist, zeigt eine Kraft-Weg-Kennlinie für einen einzelnen Federarm 4, 5.

Ein zweiter Graph, der mit 18 beziffert ist zeigt eine Kraft-Weg-Kennlinie für einen Federarm 4, 5 bei dem ein weiterer Federarm 11, 12 zugeschaltet ist. Somit kann beispielsweise nur beim Startvorgang oder bei hohen Lasten und Drehzahlen der Brennkraftmaschine der Graph 18 eingesetzt werden, um den nötigen Schlupf zu vermeiden. In den restlichen Betriebsbereichen der Brennkraftmaschine wird mit der Kennlinie 17 gearbeitet, um Kraftstoff zu sparen.

### Bezugszeichenliste:

1. Riemenspannvorrichtung
2. Antriebsachse
3. Gehäuse
4. erster Federarm
5. zweiter Federarm
6. Schwenkachse
7. Spannrolle
8. Spannrolle
9. Drehachse
10. Drehachse
11. erster weiterer Federarm
12. zweiter weiterer Federarm
13. Stellelement
14. erster weiterer Federarm abgeschaltet
15. zweiter weiterer Federarm abgeschaltet
16. Kniehebel
17. Kraft-Weg-Kennlinie Federarm
18. Kraft-Weg-Kennlinie Federarm und weiterer Federarm

## Patentansprüche

1. Riemenspannvorrichtung (1) für einen Riementrieb einer Brennkraftmaschine mit einer elektrischen Maschine mit einer Antriebsriemenscheibe, die von einer Antriebswelle um eine Antriebsachse (2) antreibbar ist, und mit zumindest einer weiteren Antriebsriemenscheibe, wobei ein Endlosriemen die Antriebsriemenscheibe und die weitere Antriebsriemenscheibe umschlingt, wobei die Riemenspannvorrichtung (1) ein Gehäuse (3) aufweist, in dem ein erster und ein zweiter Federarm (4, 5) um eine gemeinsame Schwenkachse (6) schwenkbar gelagert sind, in denen jeweils eine Spannrolle (7, 8) mit zur Antriebsachse (2) parallelen Drehachsen (9, 10) drehbar gelagert sind, wobei die Federarme (4, 5) gegeneinander abgestützt sind, und wobei die Federarme (4, 5) den Endlosriemen über die Spannrollen (7, 8) im Bereich der Antriebsriemenscheibe gegeneinander drückt,
**dadurch gekennzeichnet, dass** benachbart zu den Federarmen (4, 5) ein erster und ein zweiter weiterer Federarm (11, 12) vorgesehen sind, die von einem Stellelement (13) derart verstellbar sind, dass deren Federkräfte die Federkräfte der Federarme (4, 5) auf den Endlosriemen unterstützt oder nicht, wobei in einer Stellung des ersten weiteren Federarms (11) und einer Stellung des zweiten weiteren Federarms (12) der erste Federarm (4) und der zweite Federarm (5) von den Federkräften unterstützt werden und wobei in einer zweiten Stellung (14) für den ersten weiteren Federarm (11) und einer zweiten Stellung (15) für den zweiten weiteren Federarm (12) keine Kraftunterstützung stattfindet.

2. Riemenspannvorrichtung nach Patentanspruch 1,
**dadurch gekennzeichnet, dass** die Federarme (4, 5) und die weiteren Federarme (11, 12) koaxial zueinander angeordnet sind.

3. Riemenspannvorrichtung nach Patentanspruch 1,
**dadurch gekennzeichnet, dass** die Federarme (4, 5) und die weiteren Federarme (11, 12) axial voneinander beabstandet angeordnet sind.

4. Riemenspannvorrichtung nach einem der Patentansprüche 1 bis 3,
**dadurch gekennzeichnet, dass** das Stellelement (13) ein elektromechanisches oder ein hydraulisches Stellelement ist.

5. Riemenspannvorrichtung nach einem der Patentansprüche 1 bis 4,
**dadurch gekennzeichnet, dass** die Federarme (4, 5) und die weiteren Federarme (11, 12) einen im Wesentlichen rechteckigen oder quadratischen Querschnitt aufweisen.

6. Riemenspannvorrichtung nach einem der Patentansprüche 1 bis 4,
**dadurch gekennzeichnet, dass** die Federarme (4, 5) und die weiteren Federarme (11, 12) einen im Wesentlichen runden oder ovalen Querschnitt aufweisen.

## Claims

1. Belt-tensioning device (1) for a belt drive of an internal combustion engine, having an electric machine with a drive belt pulley which is able to be driven about a drive axis (2) by a drive shaft, and having at least one further drive belt pulley, wherein an endless belt is looped around the drive belt pulley and the further drive belt pulley, wherein the belt-tensioning device (1) has a housing (3) in which a first and a second spring arm (4, 5) are mounted so as to be pivotable about a common pivot axis (6), a tensioning roller (7, 8) with an axis of rotation (9, 10) which is parallel to the drive axis (2) being mounted rotatably in each of said spring arms, wherein the spring arms (4, 5) are supported against one another, and wherein the spring arms (4, 5) press the endless belt together via the tensioning rollers (7, 8) in the region of the drive belt pulley,
**characterized in that**, adjacent to the spring arms (4, 5), provision is made of a first and a second further spring arm (11, 12), which are able to be adjusted by a setting element (13) such that their spring forces assist, or do not assist, the spring forces of the spring arms (4, 5) on the endless belt, wherein, in a position of the first further spring arm (11) and a position of the second further spring arm (12), the first spring arm (4) and the second spring arm (5) are assisted by the spring forces, and wherein, in a second position (14) for the first further spring arm (11) and a second position (15) for the second further spring arm (12), no force assistance takes place.

2. Belt-tensioning device according to Patent Claim 1,
**characterized in that** the spring arms (4, 5) and the further spring arms (11, 12) are arranged so as to be coaxial with one another.

3. Belt-tensioning device according to Patent Claim 1,
**characterized in that** the spring arms (4, 5) and the further spring arms (11, 12) are arranged so as to be axially spaced apart from one another.

4. Belt-tensioning device according to one of Patent Claims 1 to 3,
**characterized in that** the setting element (13) is an electromechanical or hydraulic setting element.

5. Belt-tensioning device according to one of Patent Claims 1 to 4,
**characterized in that** the spring arms (4, 5) and the further spring arms (11, 12) have a substantially rectangular or square cross section.

6. Belt-tensioning device according to one of Patent Claims 1 to 4,
**characterized in that** the spring arms (4, 5) and the further spring arms (11, 12) have a substantially round or oval cross section.

## Revendications

1. Dispositif tendeur de courroie (1) pour un entraînement à courroie d'un moteur à combustion interne, comprenant une machine électrique avec une poulie de courroie d'entraînement qui peut être entraînée par un arbre d'entraînement autour d'un axe d'entraînement (2), et comprenant au moins une poulie de courroie d'entraînement supplémentaire, une courroie sans fin enveloppant la poulie de courroie d'entraînement et la poulie de courroie d'entraînement supplémentaire, le dispositif tendeur de courroie (1) présentant un boîtier (3) dans lequel un premier et un deuxième bras de ressort (4, 5) sont supportés de manière à pouvoir pivoter autour d'un axe de pivotement commun (6), dans lesquels bras est à chaque fois supporté à rotation un galet tendeur (7, 8) avec des axes de rotation respectifs (9, 10) parallèles à l'axe d'entraînement (2), les bras de ressort (4, 5) s'appuyant l'un contre l'autre et les bras de ressort (4, 5) pressant mutuellement la courroie sans fin par le biais des galets tendeurs (7, 8) dans la région de la poulie de courroie d'entraînement,
**caractérisé en ce qu'**un premier et un deuxième bras de ressort supplémentaire (11, 12) sont prévus à côté des bras de ressort (4, 5), lesquels peuvent être ajustés par un élément de commande (13) de telle sorte que leurs forces de ressort supportent ou ne supportent pas les forces de ressort des bras de ressort (4, 5) sur la courroie sans fin, dans une position du premier bras de ressort supplémentaire (11) et dans une position du deuxième bras de ressort supplémentaire (12), le premier bras de ressort (4) et le deuxième bras de ressort (5) étant supportés par les forces de ressort et dans une deuxième position (14) pour le premier bras de ressort supplémentaire (11) et dans une deuxième position (15) pour le deuxième bras de ressort supplémentaire (12), aucun support de force ne se produisant.

2. Dispositif tendeur de courroie selon la revendication 1,
**caractérisé en ce que** les bras de ressort (4, 5) et les bras de ressort supplémentaires (11, 12) sont disposés coaxialement les uns par rapport aux autres.

3. Dispositif tendeur de courroie selon la revendication 1,
**caractérisé en ce que** les bras de ressort (4, 5) et les bras de ressort supplémentaires (11, 12) sont disposés axialement à distance les uns des autres.

4. Dispositif tendeur de courroie selon l'une quelconque des revendications 1 à 3,
**caractérisé en ce que** l'élément de commande (13) est un élément de commande électromécanique ou hydraulique.

5. Dispositif tendeur de courroie selon l'une quelconque des revendications 1 à 4,
**caractérisé en ce que** les bras de ressort (4, 5) et les bras de ressort supplémentaires (11, 12) présentent une section transversale essentiellement rectangulaire ou carré.

6. Dispositif tendeur de courroie selon l'une quelconque des revendications 1 à 4,
**caractérisé en ce que** les bras de ressort (4, 5) et les bras de ressort supplémentaires (11, 12) présentent une section transversale essentiellement ronde ou ovale.
